Europäisches Patentamt

European Patent Office

Office européen des brevets

(19)

(11) Veröffentlichungsnummer: **0 060 982**
**A1**

(12) # EUROPÄISCHE PATENTANMELDUNG

(21) Anmeldenummer: **82100829.9**

(22) Anmeldetag: **05.02.82**

(51) Int. Cl.³: **G 05 B 19/10**

(30) Priorität: **23.03.81 CH 1938/81**

(43) Veröffentlichungstag der Anmeldung:
**29.09.82 Patentblatt 82/39**

(84) Benannte Vertragsstaaten:
**CH DE FR GB LI**

(71) Anmelder: **CONTRAVES AG**
**Schaffhauserstrasse 580**
**CH-8052 Zürich(CH)**

(72) Erfinder: **Schmid, Erich**
**Oehningerstieg 1**
**CH-8246 Langwiesen(CH)**

(54) Eingabevorrichtung zur Programmierung von Automaten.

(57) Eingabevorrichtung 1 zur Programmierung von Automaten, die zyklische Arbeitsabläufe durchführen. Die im wesentlichen aus "Ein-" und "Aus-" Schritten bestehenden Programme werden mit Hilfe einer Schalteranordnung 20 manuell in einen Speicher eingelesen.

Die Betätigungsbereiche (10) der Schalter 22, beispielsweise Tastschalter 23, optoelektronische Koppelemente oder kapazitive Schalter, sind vertieft in einer Führungsrille 21 angeordnet, und werden durch einen in der Führungsrille 21 geführten Stift 2 betätigt. Die in Form von Zeitablaufdiagrammen vorliegenden Programme werden mit dem Stift 2 auf die vorzugsweise linear aufgebaute Schalteranordnung 20 direkt übertragen. Jedem Schalter 22 ist eine Leuchtdiode 42 zur Kontrolle der Eingabe und zur Ueberwachung der Arbeitsabläufe zugeordnet.

FIG. 1

Croydon Printing Company Ltd.

EP 0 060 982 A1

0060982

P-464

Eingabevorrichtung zur Programmierung von Automaten

Die Erfindung betrifft eine Eingabevorrichtung zur Programmierung von Automaten  die zyklische Arbeitsabläufe durchführen, mit einer Schalteranordnung zur manuellen Eingabe der aus "Ein-" und "Aus-" Schritten bestehenden Programme.

Automaten, wie beispielsweise Verpackungsmaschinen, Montageautomaten in der Uhrenindustrie, Handling-Automaten oder Kunststoff-Spritzautomaten, werden durch Programme gesteuert, die in zeitlich vorbestimmten Schritten Ventile, Schalter etc. öffnen und schliessen. Solche Programme werden in Form von Zeitablaufdiagrammen anschaulich dargestellt. Vor Betriebnahme eines Automaten müssen die Programme anhand der Zeitdiagramme mit Hilfe einer Eingabevorrichtung in einen Speicher eingelesen und bei jeder Modifikation des Arbeitsablaufes geändert werden.

Eine solche Eingabevorrichtung ist beispielsweise durch die europäische Patentschrift 20764 (A 1) bekannt. Ueber eine matrixartig aufgebaute Tastschalteranordnung werden die "Ein-" Schritte und die "Aus-" Schritte eingegeben. Folgen mehrere Schritte der gleichen Art aufeinander, so werden die Positionen des ersten Schrittes und des letzten Schrittes eingegeben. Dies erfordert, dass die jeweiligen Positionen aus dem Zeitdiagramm herausgelesen und fehlerfrei eingetippt werden. Fehlerkorrekturen sind jedoch umständlich und unanschaulich. Da die Vorrichtung in der Regel nur wenig benutzt wird, oft nur einmal bei der Programmeingabe, sind die Herstellungskosten zu hoch.

Es ist deshalb Aufgabe der Erfindung, eine Eingabevorrichtung zu entwickeln, die zuverlässig arbeitet, eine einfache und anschauliche Programmeingabe und -Korrektur erlaubt und dennoch kostengünstig hergestellt werden kann.

Die Erfindung löst die Aufgabe dadurch, dass die Betätigungsbereiche der Schalter vertieft in einer Führungsrille angeordnet sind, und dass die Betätigung der Schalter durch einen in der Führungsrille geführten Stift erfolgt. Weitere erfindungsgemässe Ausführungsbeispiele ergeben sich aus den Unteransprüchen.

Die Erfindung soll nun anhand der Figuren näher erläutert werden.

Es zeigen:

Fig. 1   eine Draufsicht auf die Eingabevorrichtung;

Fig. 2   einen Schnitt durch die Schalteranordnung
         entlang der Linie II-II in Fig. 1;

Fig. 3 einen Schnitt durch einen Tastschalter
       entlang der Linie III-III in Fig. 1;

Fig. 4   einen Schnitt durch einen Schalter mit einem
         optoelektronischen Koppelelement entlang
         der Linie III-III in Fig. 1;

Fig. 5  ein Beispiel für ein Zeitablaufdiagramm
        eines Programms.

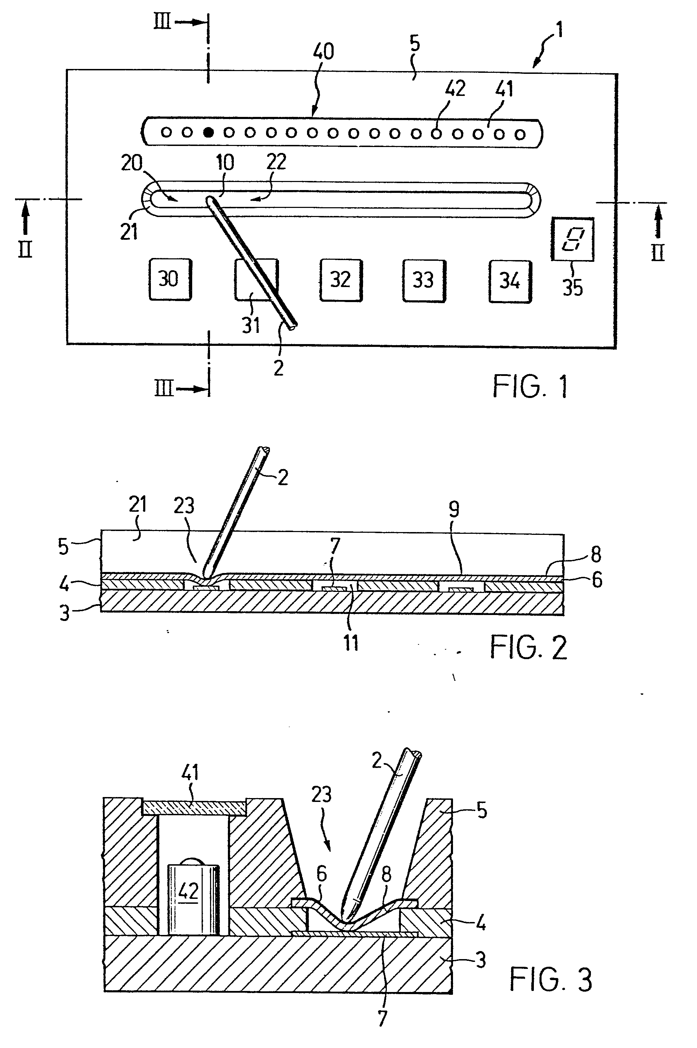

In der Figur 1 ist die Eingabevorrichtung 1, bestehend aus einer Frontplatte 5 mit der durch die Führungsrille 21 teilweise sichtbaren Schalteranordnung 20, einer Anzeigevorrichtung 40, den Bedienungstasten 30 bis 34 und einer Kanalanzeige 35, sowie dem Stift 2 dargestellt. Die Anzeigevorrichtung 40 ist aus Anzeigeelementen 42, beispielsweise Leuchtdioden, aufgebaut, die durch ein farbiges Filter 41 abgedeckt sind. Als Bedienungstasten 30 bis 34 sind im wesentlichen eine Starttaste 30, eine Stoptaste 31, eine Taste 32 für die Kanalwahl, eine Taste 33 zur Einstellung der Zykluszeit und eine Taste 34 zum Löschen der Programme vorgesehen. Die Kanalanzeige 35 zeigt den gewählten Kanal als Zahl an. Die Führungsrille 21 ist eine Ausnehmung in der Frontplatte 5 und ist so dimensioniert, dass ein Stift 2, beispielsweise ein Schreibstift, darin geführt werden kann. In diesem Ausführungsbeispiel ist die Führungsrille 21 linear, sie kann aber auch kreisförmig, elliptisch oder als Vieleck ausgebildet sein. Der Stift 2 wird vorzugsweise frei von Hand geführt, kann aber auch beweglich an der Eingabevorrichtung 1, beispielsweise an der Frontplatte 5, angeordnet sein.

Die Figur 2 zeigt einen Querschnitt durch die Schalteranordnung 20, die aus einer reihenförmigen Anordnung von Tastschaltern 23 besteht. Eine obere Kontaktfolie 6 aus Federkupfer ist zum Schutz gegen Oxidation und Abnutzung mit einer Deckfolie 8 aus Zelluloid abgedeckt. Die obere Kontaktfolie 6 liegt auf einer Abstandsfolie 4, die mit Durchbrüchen 11 versehen ist. Wird mit einem Stift 2 auf die Deckfolie 8 über einem Durchbruch 11 ein Druck ausgeübt, so biegt sich die obere Kontaktfolie 6 durch und kontaktiert eine darunterliegende Kontaktfolie 7. Beim Abheben des Stiftes 2 geht die elastische obere Kontaktfolie 6 in die ursprüngliche Lage zurück, wodurch der elektrische Kontakt wieder unterbrochen wird.

Wird der Stift 2 mit leichtem Druck auf die Deckfolie 8 in Längsrichtung durch die Führungsrille gezogen, so werden die einzelnen Schalter 23 zeitlich nacheinander während kurzer Zeit betätigt. Durch einfaches Abheben des Stiftes 2 von der Deckfolie 8 können wahlweise einzelne oder mehrere Schalter 23 von der Betätigung ausgenommen werden.

Die Figur 3 zeigt einen Schnitt durch einen betätigten Tastschalter 23, entlang der Linie III-III der Figur 1. Die untere Kontaktfolie 7 ist vorzugsweise eine Kupferfolie, die nach dem Aetzverfahren auf einer Grundplatte 3 hergestellt wird. Die elektrischen Verbindungen werden vorteilhafterweise nach den in der Leiterplattentechnik gut bekannten Verfahren hergestellt.

Ausser Tastschalter können auch Schalter verwendet werden, die auf optische oder elektrische Aenderungen ansprechen. Da eine Schalteranordnung 20 aus vielen Schaltern, beispielsweise 60, aufgebaut ist, müssen die Schalter so klein dimensioniert sein, dass die Schrittlänge von Kontakt zu Kontakt nicht wesentlich grösser als 3 mm, vorzugsweise aber 2,54 mm (1/10 Inch) ist.

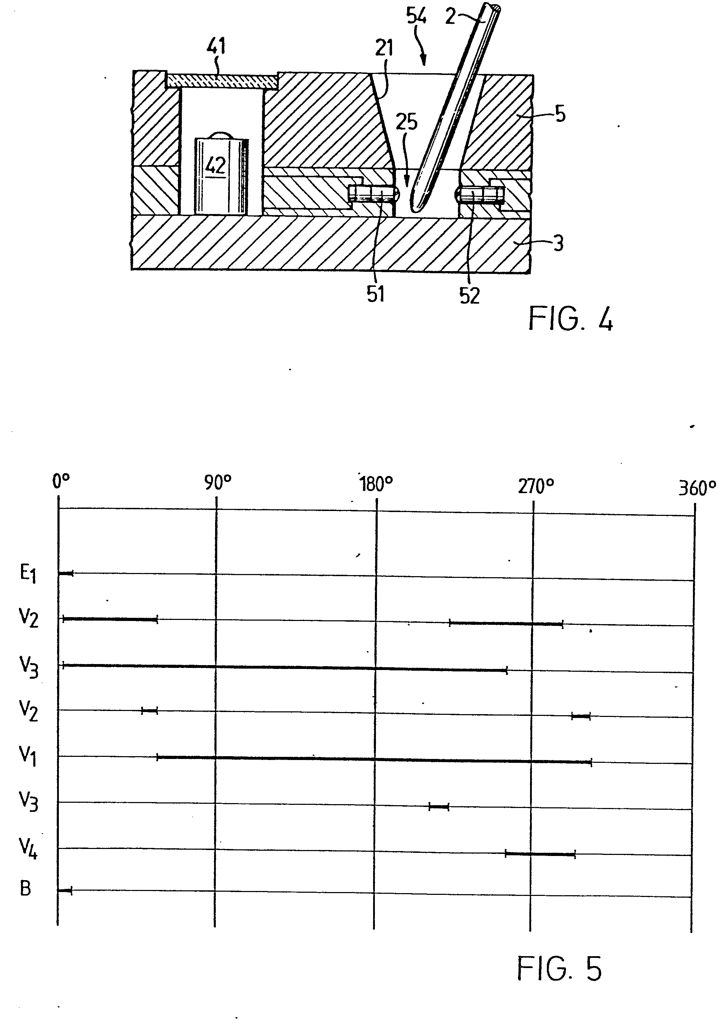

In der Figur 4 ist ein Querschnitt durch einen Schalter 54 aus optoelektronischen Koppelelementen 51, 52 dargestellt, der aus einer Emitterdiode 51 und einem Detektor 52 besteht, die zwischen der Frontplatte 5 und der Grundplatte 3 so eingebaut sind, dass ein elektrischer Kontakt beim Durchfahren des Stiftes 2 unterbrochen wird.

Es soll nun ein Verwendungsbeispiel der erfindungsgemässen Eingabevorrichtung 1 am Beispiel einer Programmierung eines Automaten mit einem Zuführungsmechanismus gegeben werden. Die zeitlich aufeinanderfolgenden Funktionen seien:

- Schraube aufheben

- Kontrolle ob Schraube vorhanden

- Schraube in richtige Position bringen

- Schraube ablegen

- Kontrolle, ob Schraube abgelegt.


Als Zuführaggregat wird ein pneumatisch gesteuerter Schwenkarm mit vier Magnetventilen ($V_1$ bis $V_4$), einer Ueberwachungseinrichtung (B) für den Betriebsdruck und drei Endschaltern ($E_1$ bis $E_3$) verwendet.


Das Funktionsdiagramm für einen Zyklus mit einer Zykluszeit von beispielsweise 2 Sekunden umfasst folgende Schritte:

|  |  |  | Kanal No. |
|---|---|---|---|
| - Start |  |  |  |
| - Kontrolle der Endstellung 1 | $E_1$ | ein | 1 |
| - Arm senken | $V_2$ | ein | 2 |
| - Teil aufnehmen (Vakuum ein) | $V_3$ | ein | 3 |
| - Kontrolle Teil vorhanden | $E_3$ | ein | 4 |
| - Arm heben | $V_2$ | aus | 2 |
| - Arm schwenken | $V_1$ | ein | 5 |
| - Kontrolle der Endstellung 2 | $E_2$ | ein | 6 |
| - Arm senken | $V_2$ | ein | 2 |
| - Teil ablegen (Luft ein) | $V_4$ | ein | 7 |
| (Vakuum aus) | $V_3$ | aus | 3 |
| - Arm heben | $V_2$ | aus, | 2 |
|  | $V_4$ | aus | 7 |
| - Kontrolle Teil abgelegt | $E_3$ | aus | 4 |
| - Arm schwenken | $V_1$ | aus | 5 |
| - Kontrolle des Betriebsdruckes | $E_4$ | ein | 8 |


Aus diesem Funktionendiagramm wird ein Zeitablaufdiagramm in an sich bekannter Weise aufgestellt. Ein solches Zeitablaufdiagramm mit 8 Ein- Aus- Zyklen ist in der Figur 5 dargestellt. Das Zeitablaufdiagramm wird von einer Bedienungsperson direkt eingegeben, indem der entsprechende Kanal gewählt wird, die Ein- Aus-Bedingungen mit dem Stift 2 auf die Schalteranordnung 20 übertragen und anschliessend gespeichert werden. Für dieses Verwendungsbeispiel wird ein Zyklus mit einer Unterteilung in 60 einzelne Schritte, und dementsprechend eine Schalteranordnung mit 60 Schaltern, verwendet. Bei einem $360^\circ$-Ablauf entspricht dies $6^\circ$ pro Schritt, was eine für die meisten Anwendungen genügende Auflösung gewährleistet. Der jeweilige Ablaufzustand der Steuerung wird durch die Leuchtdioden 42 angezeigt. Dadurch kann zu jeder Zeit festgestellt werden, wieviel der jeweiligen Zykluszeit schon abgelaufen ist, was bei langen Zeiten von besonderer Bedeutung ist.

Zur Prüfung der eingestellten Werte können die Kanäle langsam durchlaufen werden, indem die Taste 32 dauernd gedrückt wird. Durch Drücken der Löschtaste 34 können die programmierten Werte (auch punktweise) wieder mit dem Stift 2 gelöscht werden.

Patentansprüche

1. Eingabevorrichtung (1) zur Programmierung von Automaten die zyklische Arbeitsabläufe durchführen, mit einer Schalteranordnung (20) zur manuellen Eingabe der aus "Ein-" und "Aus-" Schritten bestehenden Programme, dadurch gekennzeichnet, dass die Betätigungsbereiche (10) der Schalter (22) vertieft in einer Führungsrille (21) angeordnet sind, und dass die Betätigung der Schalter durch einen in der Führungsrille (21) geführten Stift (2) erfolgt.

2. Eingabevorrichtung (1) nach Anspruch 1, dadurch gekennzeichnet, dass die Schalter (22) im wesentlichen linear angeordnet sind.

3. Eingabevorrichtung (1) nach Anspruch 1, dadurch gekennzeichnet, dass die Schalter (22) im wesentlichen kreisförmig angeordnet sind.

4. Eingabevorrichtung (1) nach Anspruch 1, dadurch gekennzeichnet, dass die Schalter Tastschalter (23) sind, und dass die Druckbereiche (9) der Tastschalter (23) vertieft in der Führungsrille (21) angeordnet sind.

5. Eingabevorrichtung (1) nach Anspruch 1, dadurch gekennzeichnet, dass die Schalter aus optoelektronischen Koppelelementen (51, 52) aufgebaut sind, und dass die Strahlengänge (25) vertieft in der Führungsrille (21) angeordnet sind.

6. Eingabevorrichtung (1) nach Anspruch 1, dadurch gekennzeichnet, dass die Schalter kapazitive Schalter sind.

7. Eingabevorrichtung (1) nach Anspruch 1, dadurch gekennzeichnet, dass die Schalter (22) induktive Schalter sind.

8. Eingabevorrichtung (1) nach Anspruch 1, dadurch gekennzeichnet, dass jedem Schalter (22) ein Anzeigeelement (42) zugeordnet ist.

0060982

FIG. 1

FIG. 2

FIG. 3

0060982

FIG. 4

FIG. 5

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 154 178 (SINGER) <br> * Insgesamt * | 1-4 | G 05 B 19/10 |
| | --- | | |
| A | US-A-3 764 813 (BELL TELEPHONE LABORATORIES) <br> * Zusammenfassung; Spalte 2, Zeile 60 - Spalte 4, Zeile 40; Figur 1 * | 1,5 | |
| | --- | | |
| A | IBM TECHNICAL DISCLOSURE BULLETIN, Band 22, Nr. 4, September 1979, Seiten 1536-1537, New York, USA <br> HS. HOFFMAN, JR.: "Grounded capacitive sensing technique" * Insgesamt * | 6 | |
| | --- | | |
| A | US-A-3 868 681 (NIPPON ELECTRIC) <br> * Zusammenfassung * | 7 | |
| | --- | | |
| A | IBM TECHNICAL DISCLOSURE BULLETIN, Band 13, Nr. 1, Juni 1970, Seiten 272-273, New York, USA <br> G.M. KREMBS: "Finger actuated input for gas panel" * Insgesamt * | 6,8 | |
| | --- | | |
| A | FR-A-2 392 440 (OPTION) <br> * Insgesamt * | 2,3 | |
| | --- | | |

RECHERCHIERTE
SACHGEBIETE (Int. Cl. ³)

G 05 B
G 06 K

-/.

Der vorliegende Recherchenbericht wurde für alle Patentansprüche erstellt.

| Recherchenort | Abschlußdatum der Recherche | Prüfer |
|---|---|---|
| DEN HAAG | 28-06-1982 | CORNILLIE O.A.R. |